# EUROPÄISCHE PATENTSCHRIFT

(11) **EP 2 247 195 B1**
(45) Veröffentlichungstag und Bekanntmachung des Hinweises auf die Patenterteilung: **24.08.2011**
(21) Anmeldenummer: 09707089.0
(22) Anmeldetag: 21.01.2009
(51) Int. Cl.: A23L 1/236, A23L 2/60, C12P 19/12

(54) **VERFAHREN ZUR HERSTELLUNG FERMENTIERTER GETRÄNKE**
METHOD FOR THE PRODUCTION OF FERMENTED BEVERAGES
PROCÉDÉ DE FABRICATION DE BOISSONS FERMENTÉES

(30) Priorität: 31.01.2008 DE 102008007072
(43) Veröffentlichungstag der Anmeldung: 10.11.2010
(73) Patentinhaber: Südzucker Aktiengesellschaft Mannheim/Ochsenfurt, 68165 Mannheim (DE)
(72) Erfinder: KOWALCZYK, Jörg, 67304 Eisenberg/Steinborn (DE); HAUSMANNS, Stephan, 68199 Mannheim (DE)
(74) Vertreter: Schrell, Andreas
(86) Internationale Anmeldenummer: PCT/EP2009/000342
(87) Internationale Veröffentlichungsnummer: WO 2009/095171

(56) Entgegenhaltungen:
- EP-B- 0 483 755
- EP-B- 0 794 259
- WO-A-2007/107295
- DE-A1- 3 241 788

## Beschreibung

Die vorliegende Erfindung betrifft Verfahren zur Herstellung, insbesondere kontinuierlichen Herstellung, fermentierter, Trehalulose-haltiger Getränke, insbesondere trinkfertige Getränke oder Getränkekonzentrate.

Trehalulose (1-O-α-D-glucopyranosyl-D-fructose) ist ein Heterodisaccharid, in dem Glucose und Fructose eine α-1,1-Bindung ausbilden. Es ist bekannt als ein verdauliches, nicht-kariogenes Süßungsmittel, das über ähnliche physiologische Eigenschaften wie Isomaltulose verfügt. Die Süßkraft der Trehalulose beträgt allerdings lediglich 40 bis 50% der der Saccharose.

Gemäß der DE 32 41 788 wird Trehalulose von dem Enzymsystem des menschlichen Dünndarms nur schwer gespalten und daher nur teilweise und verzögert resorbiert. Die EP 1 424 074 offenbart eine Ernährungszusammensetzung zur Kontrolle des Blutzuckerspiegels oder zur Prävention von Übergewicht, die Isomaltulose oder Trehalulose enthält. Die EP 1 393 637 A1 offenbart Agenzien zur Verbesserung der Konzentration und Aufmerksamkeit, die neben Isomaltulose auch Trehalulose enthalten.

Aus der EP 0 483 755 B1 ist ein Verfahren zur Herstellung von Trehalulose und Isomaltulose aus Saccharose bekannt. Gemäß der dort offenbarten Verfahrensweise wird eine Saccharose-haltige Lösung mit einem Trehalulose-bildenden Enzym in Kontakt gebracht und ein Trehalulosesirup erhalten. Das Trehalulose-bildende Enzym ist ein Enzym, welches aus einem Mikroorganismus der Gattung *Pseudomonas* oder *Agrobacterium* stammt. Die Druckschrift offenbart, dass der Einsatz dieser Mikroorganismen zu einer hohen Trehaluloseausbeute führt, wobei gleichzeitig nur sehr wenig Monosaccharide als Nebenprodukte anfallen. Angesichts der in dieser Druckschrift beschriebenen, nahezu vollständigen Umsetzung der Saccharose zu einem Trehalulose-haltigen Gemisch mit nur etwa der Hälfte der Sü-βe einer vergleichbaren Saccharoselösung kann das offenbarte Trehalulose-haltige Gemisch daher als Saccharoseaustauschstoff in Getränken nicht ohne zusätzliche Verfahrensschritte wie die Zugabe von Süßungsmitteln eingesetzt werden. Die aus der EP 0 794 259 B1 bekannten Verfahren zur Herstellung Trehalulose-haltiger Getränke sind demgemäß insofern nachteilig, als dass sie die gesonderte Zugabe von weiteren Süßungsmitteln vorsehen, um ein verzehrfähiges Getränk zu erhalten.

Der vorliegenden Erfindung liegt daher das technische Problem zugrunde, ein verbessertes Verfahren zur Herstellung von süßen, vermindert kariogenen, fermentierten Getränken bereitzustellen, das die vorgenannten Nachteile überwindet, insbesondere eine besonders einfache und ökonomische Herstellung der genannten Getränke ermöglicht.

Die Erfindung stellt in Form der Lehre des unabhängigen Anspruchs eine Lösung für dieses technische Problem bereit. Insbesondere löst die vorliegende Erfindung das technische Problem durch die Bereitstellung eines Verfahrens zur Herstellung, insbesondere kontinuierlichen Herstellung, eines fermentierten, reduziert kariogenen Getränkes, wobei dieses Verfahren folgende Schritte in der angegebenen Reihenfolge umfasst oder, in bevorzugter Ausführungsform, aus folgenden Schritten, in der angegebenen Reihenfolge, besteht:
a) Inkontaktbringen eines Saccharose-haltigen Substrats, zum Beispiel einer Saccharose-haltigen Lösung oder eines Fruchtsaftes oder eines Sirups eines Fruchtsaftextraktes oder Sirups eines Fruchtsaftkonzentrates, mit einem Trehalulose-bildenden System bei einer Temperatur von 10 bis 30°C unter gezielter Einstellung von für eine enzymatische Umsetzung geeigneten Fermentationsbedingungen, sodass die in der Lösung enthaltende Saccharose enzymatisch bis zu einem Restsaccharosegehalt von 10 bis 70 Gew.-%, insbesondere 20 bis 40%, (Gew.-%, bezogen auf das Gewicht der in der Umlagerungslösung erhaltenen Zucker, jeweils Trockensubstanz) in ein Trehalulosegemisch umgesetzt wird,
b) Filtrieren des erhaltenen Trehalulosegemisches zur Abtrennung des Trehalulose-bildenden Systems und, vorzugsweise ohne Durchführung weiterer Aufreinigungsschritte,
c) Zugabe von wenigstens einer, vorzugsweise nichtsüßenden, Getränkezutat, zum Beispiel einer lebensmittelverträglichen Säure und/oder mindestens eines Geschmacksstoffes, zum Beispiel Aromastoff, Fruchtsaftextrakt, Kräuterextrakt, Fruchtextrakt oder Teeextrakt, zu dem filtrierten in Schritt b) erhaltenen Trehalulosegemisch, sodass ein süßes, fermentiertes, vermindert kariogenes, vorzugsweise trinkfertiges, Getränk erhalten wird.

Die Erfindung stellt daher in bevorzugter Ausführungsform ein Verfahren zur Verfügung, das es ermöglicht, in einem Verfahren, insbesondere kontinuierlichen Verfahren, unmittelbar im Anschluss, vorzugsweise kontinuierlich, mit der Herstellung des für die Getränkeherstellung eingesetzten Süßungsmittels das verzehrfähige, dieses Süßungsmittel enthaltende Getränk herzustellen. In vorteilhafter Weise ist dies erfindungsgemäß bevorzugt möglich, ohne dass bei der Herstellung des Getränkes separat weitere Süßungsmittel, wie Zucker, das heisst insbesondere Saccharose, Glukose oder Fructose oder Zuckeraustauschstoffe, wie Zuckeralkohole, oder Intensivsüßstoffe hinzudosiert werden müssten. In bevorzugter Ausführungsform betrifft die Erfindung daher ein vorgenanntes Verfahren, das sich durch die Abwesenheit von Verfahrensschritten auszeichnet, welche eine Zugabe von Zuckern, Zuckeraustauschstoffen, Zuckeralkoholen und/oder Intensivsüßstoffen vorsehen. Die erfindungsgemäße Verfahrensweise ermöglicht bevorzugt die Bereitstellung eines verzehrfertigen Trehalulose-haltigen, reduziert kariogenen Getränkes, das in seiner Süßkraft und seinen organoleptischen Eigenschaften den Eigenschaften üblicher gesüßter Getränke, beispielsweise auf reiner Saccharosebasis, im wesentlichen entspricht oder sogar verbessert ist.

Ein wesentliches Merkmal der vorliegenden Lehre ist, dass die in Schritt a) erhaltene Umlagerungslösung, also das Trehalulosegemisch, welches vorzugsweise als wässrige Umlagerungslösung vorliegt, direkt und unmittelbar, das heißt abgesehen von der durch Filtration bewirkten Abtrennung des Trehalulose-bildenden Systems ohne weitere Verfahrensschritte, insbesondere Aufreinigungen, als Getränkezutat verwendet wird. Überraschenderweise zeigen derartig hergestellte Getränke beziehungsweise Getränkekonzentrate im sensorischen Test ein deutlich verbessertes Geschmacksprofil. Die hergestellten fermentierten Getränke sind vollmundiger, aromatischer und weisen eine ausgewogenere Süße auf. Ohne durch die Theorie gebunden sein zu wollen, kann für die derartig erzielte verbesserte Sensorik und das verbesserte Geschmacksprofil die Anwesenheit von während des Herstellverfahrens nicht entfernten Fermentationsnebenprodukten ursächlich sein, die synergistische Effekte mit Aromakomponenten eingehen.

Die vorliegende Verfahrensweise ist auch vorteilhaft insofern, als dass sie die unmittelbare, vorzugsweise kontinuierliche Herstellung von fermentierten Getränken mit einem Süßungsmittelgehalt, insbesondere einem Trehalulosegehalt gestattet, ohne dass die Sü-βungsmittelkomponente vor Herstellung des Getränkes gelagert, zwischengelagert oder konditioniert werden müsste. In vorteilhafter Weise kann wie erläutert die Getränkeherstellung so unmittelbar im Anschluss an beziehungsweise vorzugsweise kontinuierlich mit dem Herstellverfahren für die Süßungsmittelkomponente des Getränkes erfolgen. In vorteilhafter Weise kann gleichzeitig mit der Herstellung des Getränkes durch die erfindungsgemäß vorgesehene gezielte und kontrollierte Einstellung der Fermentationsbedingungen in Schritt a) des Verfahrens der gewünschte Süßegehalt des Getränkes eingestellt werden, ohne dass separat Süßungsmittelkomponenten wie Saccharose, Intensivsüßstoffe oder dergleichen zu dosiert werden müssten. Dieser Süßegehalt bestimmt sich aus dem Anteil der nicht umgesetzten Saccharose mit vergleichsweise höherer Süßkraft, dem Anteil an erhaltener Trehalulose sowie der Nebenprodukte Isomaltulose, Glucose, Fructose, Isomaltose und Spuren von Oligosacchariden. Die erfindungsgemäße Vorgehensweise ermöglicht daher durch Steuerung der Fermentationsbedingungen die gezielte Einstellung eines erwünschten Süßegehaltes, wobei das in dem Getränk bereitgestellte Süßungsmittelgemisch aus zumindest Trehalulose und Saccharose aufgrund des Gehaltes an Trehalulose kalorienreduziert sowie vermindert kariogen wirkt und wobei das Gemisch ökonomisch und einfach in vorzugsweise kontinuierlicher Verfahrensweise, das heisst in einem Online-Verfahren, hergestellt werden kann.

In besonders bevorzugter Ausführungsform sieht die Erfindung daher ein Verfahren zur Herstellung eines fermentierten, reduziert kariogenen Getränkes vor, wobei die Herstellung des Getränkes allein aus den angegebenen Verfahrensschritten a), b) und c) besteht. In besonders bevorzugter Ausführungsform wird das Saccharose-haltige Substrat daher zur Herstellung einer das Trehalulosegemisch enthaltenden Umlagerungslösung mit einem Trehalulose-bildenden System in Kontakt gebracht, das Trehalulose bildende System von der Umlagerungslösung abgetrennt und die Umlagerungslösung direkt und, abgesehen von dem durchgeführten Abtrennen des Trehalulose-bildenden Systems, unmittelbar ohne weitere Aufreinigung oder sonstige Verfahrensschritte, als Komponente eines Getränkes beziehungsweise Getränkekonzentrates verwendet und befindet sich dementsprechend in dieser Form in dem letztendlich konsumierten Getränk.

Im Zusammenhang mit der vorliegenden Erfindung wird unter dem Begriff "Getränk" ein trinkfertiges Getränk, vorzugsweise auf wässriger Basis, aber auch ein Getränkekonzentrat verstanden, der beispielsweise durch Eindampfen des erhaltenen Trehalulosegemisches mit der mindestens einen Getränkezutat bereitgestellt werden kann und vor Verzehr mit einem Lösungsmittel, zum Beispiel Wasser, sowie gegebenenfalls CO₂, trinkfertig gemacht wird. Die hergestellten Getränke können daher im Zusammenhang mit der vorliegenden Erfindung in Form von Lösungen, Konzentraten, Extrakten, Getränkepulvern oder Suspensionen vorliegen.

Im Zusammenhang mit der vorliegenden Erfindung wird unter einem Getränk auch ein Fruchtgetränk, ein Smoothie beziehungsweise nach Eindicken, also Entfernen von Wasser, auch ein Fruchtkonzentrat, beispielsweise eingesetzt zur Herstellung von Fruchtzubereitungen wie Joghurtprodukte, verstanden.

Im Zusammenhang mit der vorliegenden Erfindung wird unter einem Saccharose-haltigen Substrat ein Substrat verstanden, das Saccharose aufweist und in den Verfahrensschritt a) zur Umsetzung in das Trehalulosegemisch eingesetzt wird. Ein Sachharose-haltiges Substrat kann beispielsweise eine wässrige Saccharose-haltige Lösung, eine wässrige Lösung oder ein Sirup eines Saccharose-haltigen Fruchtsaftextrakts, ein Saccharose-haltiger Sirup, ein Saccharose-haltiger Fruchtsaftkonzentrat in Sirupform, ein Saccharose-haltiger Fruchtkonzentrat, ein Saccharose-haltiger Fruchtsaft, ein Saccharose-haltiges Fruchtsaftpulver oder ein wässriger Sirup von Saccharose-haltigen Fruchtzubereitungen oder dergleichen sein. In bevorzugter Ausführungsform wird dieses Substrat, sei es zum Beispiel in Form eines Fruchtsaftextraktes, Fruchtsaftkonzentrates, Fruchtsaftpulvers oder Saccharose vorliegt, in Lösung, vorzugsweise wässrige Lösung gebracht, um die anschließende enzymatische Umsetzung zu ermöglichen. Das Saccharose-haltige Substrat liegt dann als Saccharose-haltige Lösung vor.

Im Zusammenhang mit der vorliegenden Erfindung wird unter Aufreinigung eines Gemisches beziehungsweise einer Umlagerungslösung die Abtrennung von mindestens einer Substanz aus diesem Gemisch oder der Lösung verstanden, wobei diese abgetrennte Substanz nicht Wasser ist.

Besonders bevorzugt liegt der Saccharosegehalt der Saccharose-haltigen Lösung bei 3 bis 100 Gewichts-%, vorzugsweise 3 bis 99 Gewichts-%, insbesondere 20 bis 100 Gewichts-% (jeweils auf Trockensubstanz, abgekürzt a. TS), vorzugsweise 25 bis 90 Gewichts-%, 30 bis 80 Gewichts-%, 35 bis 45 Gewichts-%, 40 bis 75 Gewichts-%, insbesondere 45 bis 70 Gewichts-% oder vorzugsweise 50 bis 65 Gewichts-% (jeweils a. TS der Lösung). In besonders bevorzugter Ausführungsform liegt der Saccharosegehalt der Saccharose-haltigen Lösung um 5 bis 100 %, vorzugsweise 10 bis 50 %, insbesondere 20 bis 40 % (jeweils bezogen auf den Restsaccharosegehalt des Trehalulose-haltigen Gemisches, a. TS) höher als der Restsaccharosegehalt des Trehalulose-haltigen Gemisches (a. TS). In der Saccharose-haltigen Lösung liegt in bevorzugter Ausführungsform vor der Fermentation keine Trehalulose oder Trehalulose in einer Menge von 0,1 bis 5 Gewichts-%, insbesondere 0,1 bis 3 Gewichts-% (jeweils a. TS) vor.

Im Zusammenhang mit der vorliegenden Erfindung werden unter für die enzymatische Umsetzung geeigneten Fermentationsbedingungen, insbesondere unter den gezielt einzustellenden Fermentationsbedingungen, insbesondere die in Verfahrensschritt a) eingesetzte Temperatur, der pH-Wert und die Umsetzungsdauer verstanden.

In besonders bevorzugter Ausführungsform wird während der Fermentation in Verfahrensschritt a) ständig oder periodisch die Zusammensetzung der enthaltenen Umlagerungslösung, das heisst der Zuckerlösung kontrolliert, um so die gezielte Steuerung und/oder Regulierung des erwünschten Produktes, das heisst der erwünschten Zuckerzusammensetzung, insbesondere des erwünschten Verhältnisses von Trehalulose zu Saccharose während des kontinuierlichen Verfahrens gewährleisten zu können.

Im Zusammenhang mit der vorliegenden Erfindung wird unter einem Trehalulose-haltigen Gemisch, das hier auch als Trehalulosegemisch bezeichnet wird, ein Gemisch verstanden, das zumindest Trehalulose und (Rest)-Saccharose enthält, und aus der Fermentation gemäß Schritt a) der vorliegenden Verfahrensabfolge stammt.

Die Umsetzungsdauer wird vorteilhafterweise in bevorzugter Ausführungsform durch die Durchflussgeschwindigkeit der umzusetzenden Saccharose-haltigen Lösung durch den für die Durchführung von Verfahrensschritt a) eingesetzten Behälter, insbesondere den Bioreaktor, gesteuert.

In einer weiteren bevorzugten Ausführungsform ist vorgesehen, dass das erfindungsgemäße Verfahren, insbesondere dessen Schritt a), bei einer Temperatur von 10 bis 25°C, vorzugsweise 10 bis 20°C, vorzugsweise 10 bis 17°C durchgeführt wird. In einer weiteren bevorzugten Ausführungsform ist vorgesehen, dass das erfindungsgemäße Verfahren, insbesondere dessen Schritt a) bei einem pH-Wert von 5,0 bis 7,0, vorzugsweise 6,0 bis 7,0 durchgeführt wird. In einer weiteren bevorzugten Ausführungsform ist vorgesehen, dass das erfindungsgemäße Verfahren, insbesondere dessen Schritt a), unter aeroben Bedingungen durchgeführt wird. Erfindungsgemäß kann vorgesehen sein, die Fermentation in Verfahrensschritt a) in einem üblichen Bioreaktor oder Fermenter durchzuführen, beispielsweise mit Belüftungsraten von 1/10 bis 1 wm. In bevorzugter Ausführungsform kann auch eine Umwälzung der Umlagerungslösung durchgeführt werden, insbesondere mit Umdrehungen von 100 bis 600 Upm.

In einer besonders bevorzugten Ausführungsform kann vorgesehen sein, die Fermentationsbedingung gezielt so einzustellen, dass in der nach der Umsetzung erhaltenen Umlagerungslösung, also der Lösung, die das Trehalulosegemisch enthält, 10 bis 70 Gew.-%, vorzugsweise 20 bis 40 Gew.-%, Saccharose, 0 bis 10 Gew.-% Isomaltulose, 0 bis 3 Gew.-% andere Kohlenhydrate, zum Beispiel Glucose, Fructose und Isomaltulose, und 50 bis 80 Gew.-% Trehalulose enthalten sind, wobei die Gesamtmenge der Komponenten 100 Gew.-% ergibt (bezogen auf das Trockengewicht (TS) der in der Umsetzungslösung enthaltenen Zucker).

In vorteilhafter bevorzugter Weise ist die bevorzugt eingesetzte Saccharose-haltige Lösung bevorzugt eine wässrige Saccharoselösung. Das erfindungsgemäß eingesetzte Saccharose-haltige Substrat, zum Beispiel die Saccharose-haltige Lösung oder ein Fruchtsaftkonzentrat, weist bevorzugt einen Saccharosegehalt von 0,1 Gew.-% bis 60 Gew.-%, insbesondere 10 Gew.-% bis 60 Gew.-%, bevorzugt 20 Gew.-% bis 50 Gew.-% Saccharose auf (bezogen auf Gesamtgewicht des Substrates, zum Beispiel der Lösung).

Im Zusammenhang mit der vorliegenden Erfindung wird unter einer Getränkezutat eine zusätzlich zu dem als Süßungsmittel wirkenden Trehalulosegemisch in dem Getränk vorhandene Komponente verstanden, die körpergebende und/oder organoleptisch wirkende, zum Beispiel geschmacklich oder pharmazeutisch wirkende Eigenschaften aufweist. Beispiele für Getränkezutaten im Sinne der vorliegenden Erfindung sind Geschmacksstoffe, Geruchsstoffe, Farbstoffe, Füllstoffe, Vitamine, Salze, pharmazeutisch aktive Substanzen, Fruchtextrakte, Fruchtkonzentrate, Milch, Kakao, Tee, Alkohol etc..

In besonders vorteilhafter Weise ist vorgesehen, dass im Verfahrensschritt c) dem filtrierten Trehalulosegemisch CO₂ zugeführt wird, das heisst eine Carbonatisierung durchgeführt wird.

In einer weiteren vorteilhaften Ausführungsform ist vorgesehen, dass das Trehalulose-bildende System ein immobilisiertes System ist. Für die Immobilisierung der eingesetzten enzymatischen Aktivität können gängige Verfahren eingesetzt werden, zum Beispiel die Verwendung von Natriumalginatkügelchen, die darauf immobilisierte Trehalulose-bildende Enzyme oder Mikroorganismen aufweisen.

In einer weiteren bevorzugten Ausführungsform kann vorgesehen sein, das Trehalulose-bildende System in nicht-immobilisierter Form einzusetzen.

In einer besonders bevorzugten Ausführungsform ist vorgesehen, dass das Trehalulose-bildende System ein Trehalulose-bildendes Enzym ist, das heisst eine Glucosyltransferase darstellt, die in der Lage ist, aus Saccharose Trehalulose, insbesondere ein Trehalulosegemisch aus Trehalulose und Isomaltulose, sowie gegebenenfalls Glucose, Isomaltose und Fructose mit einem erhöhten Trehalulose-Anteil im Vergleich zu Isomaltulose zu bilden. In einer besonders bevorzugten Ausführungsform liegt die Trehalulose im Verhältnis zur Isomaltulose in dem hergestellten Trehalulosegemisch in einem Verhältnis von 4:1 bis 10:1 vor.

In einer weiteren bevorzugten Ausführungsform der Erfindung wird als Trehalulose-bildendes System ein Mikroorganismus eingesetzt, der zumindest ein vorstehend definiertes Enzym enthält.

In besonders vorteilhafter Ausführungsform der vorliegenden Erfindung ist das eingesetzte Trehalulose-bildende Enzym ein Enzym, welches aus einem Mikroorganismus der Gattung *Pseudomonas* stammt, insbesondere aus *Pseudomonas mesoacidophila* MX-45 (FERM BP 3619). Dieser Organismus ist zum Beispiel in der EP 0 483 755 B1 oder Nagai et al. (Biosci. Biotech. Biochem. 58 (10) 1789-1793 (1994)) beschrieben.

Selbstverständlich kann auch vorgesehen sein, dass die Enzyme nicht natürlichen Ursprungs sind, sondern stattdessen mutierte Enzyme darstellen, insbesondere solche, die aufgrund von Mutationen im Erbgut der vorgenannten Mikroorganismen bereitgestellt werden.

In einer Ausführungsform ist vorgesehen, dass in Schritt b) des Verfahrens zusätzlich zu der Filtration auch eine Deionisierung durchgeführt wird, zum Beispiel über einen Ionenaustauscher. In bevorzugter Ausführungsform wird eine Deionisierung nicht durchgeführt. Erfindungsgemäß kann in einer weiteren Ausführungsform vorgesehen sein, in Schritt b) oder in Schritt c) eine Entfärbung, zum Beispiel mit Aktivkohle, durchzuführen. In bevorzugter Ausführungsform wird eine Entfärbung nicht durchgeführt.

Die Erfindung sieht in besonders bevorzugter Ausführungsform vor, dass im gesamten Verfahrensgang keine Zugabe von süßenden Substanzen, insbesondere süßenden Getränkezutaten, vorzugsweise Süßungsmitteln, insbesondere von Zuckern, Zuckeraustauschstoffen und/oder Intensivsüßstoffen, stattfindet. In besonders bevorzugter Ausführungsform stammen also alle süßenden Komponenten des erhaltenen und im süßen Getränk eingesetzten TrehaluloseGemisches direkt aus dem eingesetzten Saccharose-haltigen Substrat.

In einer weiteren bevorzugten Ausführungsform zeichnet sich die erfindungsgemäße Verfahrensweise dadurch aus, dass in keinem der vorgesehenen Verfahrensschritte eine Spaltung, insbesondere eine signifikante Spaltung, von Saccharose in Glukose und Fructose stattfindet, beispielsweise enzymatisch mittels einer Invertase oder Säure-katalysiert.

In einer weiteren bevorzugten Ausführungsform ist vorgesehen, dass in Schritt b) oder in Schritt c) des Verfahrens eine Zufuhr von Lösungsmittel, insbesondere Wasser, oder eine Aufkonzentrierung der Komponenten, insbesondere des Trehalulosegemisches erfolgt.

In einer besonders bevorzugten Ausführungsform ist vorgesehen, dass als lebensmittelverträgliche Säure Zitronensäure oder Milchsäure verwendet wird.

In einer weiteren bevorzugten Ausführungsform kann vorgesehen sein, zusätzlich zu dem durch die Umlagerung in dem Getränk entstehenden Trehalulose-haltigen Gemisch, das 10 bis 70 Gew.-%, bevorzugt 20 bis 40 Gew.-%, Saccharose aufweist, zusätzlich einen Intensivsüßstoff gesondert zuzudosieren. In einer weiteren bevorzugten Ausführungsform kann demgemäß vorgesehen sein, in Schritt c) des erfindungsgemäßen Verfahrens dem Trehalulosegemisch auch Intensivsüßstoffe, wie Aspartam, Cyclamat, Acesulfam-K, Glycyrrhizin, Saccharin, Rebaudioside, Sucralose, Alitame, Neohesperidin-Dihydrochalon, Stevioside, Thaumatin oder ähnliche hinzuzufügen.

In einer weiteren bevorzugten Ausführungsform kann auch vorgesehen sein, dass dem Trehalulose-haltigen Gemisch in Schritt c) des Verfahrens Zuckeralkohole zugemischt werden, zum Beispiel Isomalt, Isomalt ST, Isomalt GS, Mannit, Sorbit, Xylit, Erythrit oder Maltit.

In einer weiteren bevorzugten Ausführungsform ist vorgesehen, dass das bereitgestellte Getränk ein Erfrischungsgetränk, Sportlergetränk, Milchgetränk, kohlensäurehaltiges Getränk, gesüßtes Mineralwasser, Limonade, Kräuterlimonade, Fruchtsaftgetränk, Energiegetränk, alkoholisches Getränk, Sauermilchgetränk, Soft Drink, Kaffee, Tee, Kakaogetränk, Fruchtsaft, Gemüsesaft, Smoothie, Fruchtdrink, Fruchtzubereitung oder ähnliches ist.

In besonders bevorzugter Ausführungsform wird das Verfahren in kontinuierlicher Form durchgeführt. In einer weiteren bevorzugten Ausführungsform kann jedoch auch vorgesehen sein, das Verfahren diskontinuierlich oder semikontinuierlich durchzuführen. Insbesondere ist es erfindungsgemäß auch möglich, eine Batchfermentation durchzuführen.

Weitere vorteilhafte Ausgestaltungen der Erfindung ergeben sich aus den Unteransprüchen.

Die Erfindung wird anhand des folgenden Beispiels näher erläutert

### Beispiel:

Zur Herstellung des Biokatalysators wurden von einer Abimpfung des Stammes *Pseudomonas mesoacidophila* MX-45 (auch hinterlegt unter FERM BP 11 808) Zellen mit 10 ml eines sterilen Nährsubstrates aus 8 kg Dicksaft von einer Zuckerfabrik (Trockensubstanzgehalt = 65%), 2 kg Maisquellwasser, 0,1 kg (NH₄)₂ HPO₄ und 89,9 kg destilliertes Wasser auf einen pH-Wert von 7,2 eingestellt, abgeschwemmt. Diese Suspension diente als Impfgut für eine Schüttelmaschinen-Vorkultur in einem 1-Liter-Kolben mit 200 ml der Nährlösung.

Nach einer 30-stündigen Bebrütung bei 29°C wurden mit je 10 Kolben (Gesamtinhalt 2 Liter) 18 Liter Nährlösung obiger Zusammensetzung in einem 30-Liter-Kleinfermenter beimpft und bei 29°C mit 20 Liter Luft pro Minute und einer Rührgeschwindigkeit von 350 Upm fermentiert.

Nach Erreichen von Keimzahlen über 5 x 10⁹ Keimen/ml wurde die Fermentation abgestellt, die Zellen durch Zentrifugation aus der Fermenterlösung abgeerntet, in einer 2%-igen Natriumalginatlösung suspendiert und durch Eintropfen der Suspension in eine 2%-ige Calcuimchloridlösung immobilisiert. Die entstandenen Immobilisatkugeln wurden mit Wasser gewaschen.

Zur Herstellung des fermentiertes Getränkes wurden die derart erhaltenen immobilisierten Zellen von *Pseudomonas mesoacidophila* MX-45 in einen temperierbaren Reaktor gefüllt. Dieser wurde auf 25 bis 30°C temperiert und mit einer Saccharoselösung mit etwa 35 bis 45% TS-Gehalt kontinuierlich durchströmt. Die Fließgeschwindigkeit wurde dabei gezielt so eingestellt, dass ein Restsaccharosegehalt von 20 bis 40 Gew.-% in der erhaltenen Trehalulosegemischhaltigen Umlagerungslösung (bezogen auf TS aller Zucker dieser Umlagerungslösung) erhalten wurde. Die Umlagerungslösung wurde ständig auf ihre Zusammensetzung hin kontrolliert und die Fließgeschwindigkeit so angepasst beziehungsweise erhalten, dass der erwünschte Restsaccharosegehalt bei gleichzeitiger Trehaluloseanreicherung gewährleistet wurde.

Die derart hergestellte, Trehalulosegemisch-haltige Lösung (Tabelle 1) wurde zur Abtrennung der immobilisierten Zellen filtriert und anschließend, falls erwünscht, an einem Kationen- und Anionaustauscher deionisiert.

Eine HPLC-Analyse des aus dem Reaktor austretenden Trehalulosegemisches ergab folgende Zusammensetzung:

**Tabelle 1**

| | |
|---|---|
| Fructose | 0,2% a. TS |
| Glucose | 0,2% a. TS |
| Saccharose | 25% a. TS |
| Isomaltulose | 9,5% a. TS |
| Isomaltose | 0,1% a. TS |
| Trehalulose | 64,8% a. TS |
| Oligomere (DP > 3) | 0,2% a. TS |

Anschließend wurden kontinuierlich Zitronensäure, Vitamin C sowie verschiedene weitere Zutaten zudosiert, wie aus den nachstehenden Tabellen 2 (Erfrischungsgetränk), 3 (Orangenfruchtsaftgetränk) und 4 (Milchgetränk) ersichtlich.

**Tabelle 2: Erfrischungsgetränk (Gewichtsanteile bezogen auf 250 ml fertiges Getränk; Restanteil: Wasser)**

| | |
|---|---|
| Trehalulosegemisch mit Restsaccharosegehalt von 25 Gew.-% | 8 Gewichtsanteile |
| Zitronensäure | 0,15 Gewichtsanteile |
| Vitamin C | 0,03 Gewichtsanteile |
| Natriumchlorid | 0,05 Gewichtsanteile |
| Kaliumchlorid | 0,04 Gewichtsanteile |
| Kalziumchlorid | 0,012 Gewichtsanteile |
| Magnesiumcarbonat | 0,002 Gewichtsanteile |
| Natriumglutamat | 0,006 Gewichtsanteile |

**Tabelle 3: Orangenfruchtsaftgetränk (Gewichtsanteile bezogen auf 250 ml Getränk; Restanteil: Wasser)**

| | |
|---|---|
| Trehalulosegemisch mit Restsaccharosegehalt von 25 Gew.-% | 16 Gewichtsanteile |
| Orangenfruchtsaft, 1/5 Konzentrat | 4 Gewichtsanteile |
| Zitronensäure | 0,35 Gewichtsanteile |
| Natriumcitrat | 0,20 Gewichtsanteile |
| Vitamin C | 0,6 Gewichtsanteile |
| Beta-Carotin | 0,01 Gewichtsanteile |

**Tabelle 4: Gesüßtes Milchgetränk (Gewichtsanteile bezogen auf 100 ml Getränk)**

| | |
|---|---|
| Trehalulosegemisch mit Restsaccharosegehalt von 25 Gew.-% | 4 Gewichtsanteile |
| frische Milch | 96 Gewichtsanteile |

Zur Herstellung des Milchgetränkes wurde im Anschluss an die Zugabe der Milchkomponente in die Trehalulosegemisch-haltige Lösung das erhaltene Gemisch sterilisiert und zu einem 75%igen Sirup aufkonzentriert sowie steril abgefüllt.

## Patentansprüche

1. Verfahren zur Herstellung eines fermentierten, süßen, reduziert kariogenen Getränkes, wobei
a) ein Saccharose-haltiges Substrat mit einem Trehalulose-bildenden System bei einer Temperatur von 10 bis 30°C unter gezielter Einstellung geeigneter Fermentationsbedingungen so in Kontakt gebracht wird, dass die in dem Substrat enthaltende Saccharose enzymatisch bis zu einem Restsaccharosegehalt von 10 bis 70 Gew.-% (Gew.-% TS, bezogen auf das Gewicht der in der Umlagerungslösung enthaltenen Zucker) in ein Trehalulosegemisch umgesetzt wird,
b) das erhaltene Trehalulosegemisch zur Abtrennung des Trehalulose-bildenden Systems filtriert und ohne Durchführung weiterer Aufreinigungsschritte
c) dem in Schritt b) erhaltenen filtrierten Trehalulosegemisch mindestens eine nicht süßende Getränkezutat, insbesondere lebensmittelverträgliche Säure und/oder mindestens ein Geschmacksstoff, zum Erhalt des süßen, fermentierten Getränkes zugesetzt wird.

2. Verfahren nach Anspruch 1, wobei dem filtrierten Trehalulosegemisch in Schritt c) CO₂ zugeführt wird.

3. Verfahren nach einem der vorhergehenden Ansprüche, wobei das Trehalulose-bildende System ein immobilisiertes System ist.

4. Verfahren nach einem der Ansprüche 1 oder 2, wobei das Trehalulose-bildende System ein nicht-immobilisiertes System ist.

5. Verfahren nach einem der vorhergehenden Ansprüche, wobei das Trehalulose-bildende System ein Trehalulose-bildendes Enzym umfasst.

6. Verfahren nach einem der Ansprüche 1 bis 4, wobei das Trehalulose-bildende System einen Trehalulose-bildenden Mikroorganismus umfasst.

7. Verfahren nach einem der vorhergehenden Ansprüche, wobei der Mikroorganismus zu der Gattung *Pseudomonas* gehört.

8. Verfahren nach einem der vorhergehenden Ansprüche, wobei der zu der Gattung *Pseudomonas* gehörende Mikroorganismus *Pseudomonas mesoacidophila MX-45,* FERM BP 3619 ist.

9. Verfahren nach einem der vorhergehenden Ansprüche, wobei das Verfahren bei einer Temperatur von 10 bis 20°C durchgeführt wird.

10. Verfahren nach einem der vorhergehenden Ansprüche, wobei in dem in Schritt a) erhaltenen Trehalulosegemisch Trehalulose und Isomaltulose in einem Gewichtsverhältnis von 4:1 bis 10:1 1 vorliegt.

11. Verfahren nach einem der vorhergehenden Ansprüche, wobei das Verfahren bei einem pH-Wert von 5 bis 7 durchgeführt wird.

12. Verfahren nach einem der vorhergehenden Ansprüche, wobei der Restsaccharosegehalt 20 bis 40 Gew.-% beträgt.

13. Verfahren nach einem der vorhergehenden Ansprüche, wobei das Substrat in Form einer Saccharose-haltigen Lösung, eines Sirups eines Saccharose-haltigen Getränkeextrakts, eines Saccharose-haltigen Fruchtsafts oder eines Sirups eines Saccharose-haltigen Fruchtsaftkonzentrats vorliegt.

14. Verfahren nach einem der vorhergehenden Ansprüche, wobei das erhaltene Getränk in Form eines aufkonzentrierten Getränkekonzentrats vorliegt.

## Claims

1. Process for producing a fermented, sweet, reduced-cariogenic beverage, wherein
a) a sucrose-containing substrate is brought into contact with a trehalulose-forming system at a temperature of from 10 to 30°C with targeted adjustment of suitable fermentation conditions such that the sucrose present in the substrate is converted enzymatically into a trehalulose mixture up to a residual sucrose content of from 10 to 70% by weight (% by weight of TS, based on the weight of the sugars present in the rearrangement solution),
b) the resulting trehalulose mixture is filtered to separate off the trehalulose-forming system and, without carrying out further purification steps,
c) at least one nonsweetening beverage additive, in particular food-grade acid and/or at least one flavoring, is added to the filtered trehalulose mixture obtained in step b) to obtain the sweet, fermented beverage.

2. Process according to claim 1, where CO₂ is introduced into the filtered trehalulose mixture in step c).

3. Process according to one of the preceding claims, where the trehalulose-forming system is an immobilized system.

4. Process according to one of claims 1 or 2, where the trehalulose-forming system is a non-immobilized system.

5. Process according to one of the preceding claims, where the trehalulose-forming system comprises a trehalulose-forming enzyme.

6. Process according to one of claims 1 to 4, where the trehalulose-forming system comprises a trehalulose-forming microorganism.

7. Process according to one of the preceding claims, where the microorganism belongs to the genus *Pseudomonas.*

8. Process according to one of the preceding claims, where the microorganism belonging to the genus *Pseudomonas* is *Pseudomonas mesoacidophila MX-45,* FERM BP 3619.

9. Process according to one of the preceding claims, where the process is carried out at a temperature of from 10 to 20°C.

10. Process according to one of the preceding claims, where trehalulose and isomaltulose is present in a weight ratio of from 4:1 to 10:1 in the trehalulose mixture obtained in step a).

11. Process according to one of the preceding claims, where the process is carried out at a pH of from 5 to 7.

12. Process according to one of the preceding claims, where the residual sucrose content is 20 to 40% by weight.

13. Process according to one of the preceding claims, where the substrate is present in the form of a sucrose-containing solution, a syrup of a sucrose-containing beverage extract, a sucrose-containing fruit juice or a syrup of a sucrose-containing fruit juice concentrate.

14. Process according to one of the preceding claims, where the beverage obtained is in the form of a concentrated beverage concentrate.

## Revendications

1. Procédé de fabrication d'une boisson fermentée sucrée, à caractère cariogène réduit, dans lequel
a) un substrat contenant du saccharose est amené en contact avec un système formant du tréhalulose à une température de 10 à 30°C avec réglage ciblé de conditions de fermentation appropriées, de sorte que le saccharose contenu dans le substrat est transformé par voie enzymatique en un mélange de tréhalulose jusqu'à une teneur en saccharose résiduel de 10 à 70 % en poids (% en poids TS, par rapport au poids du sucre contenu dans la solution de transposition),
b) le mélange de tréhalulose obtenu est filtré pour séparation du système formant du tréhalulose et sans réalisation d'autres étapes de purification,
c) au moins un ingrédient de boisson non sucré, notamment de l'acide compatible avec les aliments et/ou au moins un arôme, est ajouté au mélange de tréhalulose filtré obtenu à l'étape b) en vue d'obtenir la boisson fermentée sucrée.

2. Procédé selon la revendication 1, dans lequel du CO₂ est amené au mélange de tréhalulose filtré à l'étape c).

3. Procédé selon l'une quelconque des revendications précédentes, dans lequel le système formant du tréhalulose est un système immobilisé.

4. Procédé selon l'une quelconque des revendications 1 ou 2, dans lequel le système formant du tréhalulose est un système non immobilisé.

5. Procédé selon l'une quelconque des revendications précédentes, dans lequel le système formant du tréhalulose comprend une enzyme formant du tréhalulose.

6. Procédé selon l'une quelconque des revendications 1 à 4, dans lequel le système formant du tréhalulose comprend un microorganisme formant du tréhalulose.

7. Procédé selon l'une quelconque des revendications précédentes, dans lequel le microorganisme appartient au genre Pseudomonas.

8. Procédé selon l'une quelconque des revendications précédentes, dans lequel le microorganisme appartenant au genre Pseudomonas est Pseudomonas mesoacidophila MX-45, FERM BP 3619.

9. Procédé selon l'une quelconque des revendications précédentes, dans lequel le procédé est réalisé à une température de 10 à 20°C.

10. Procédé selon l'une quelconque des revendications précédentes, dans lequel du tréhalulose et de l'isomaltulose sont présents dans un rapport pondéral de 4/1 à 10/1 dans le mélange de tréhalulose obtenu à l'étape a).

11. Procédé selon l'une quelconque des revendications précédentes, dans lequel le procédé est réalisé à un pH de 5 à 7.

12. Procédé selon l'une quelconque des revendications précédentes, dans lequel la teneur en saccharose résiduel se monte à 20 à 40 % en poids.

13. Procédé selon l'une quelconque des revendications précédentes, dans lequel le substrat est présent sous forme d'une solution contenant du saccharose, d'un sirop d'un extrait de boisson contenant du saccharose, d'un jus de fruit contenant du saccharose ou d'un sirop d'un concentré de jus de fruit contenant du saccharose.

14. Procédé selon l'une quelconque des revendications précédentes, dans lequel la boisson obtenue est présente sous forme d'un concentré de boisson concentré.
